# EUROPEAN PATENT SPECIFICATION

(11) **EP 3 944 276 B1**
(45) Date of publication and mention of the grant of the patent: **08.02.2023**
(21) Application number: 20186770.2
(22) Date of filing: 20.07.2020
(51) Int. Cl.: H01H 33/02, H01H 33/53

(54) **CIRCUIT BREAKER COMPARTMENT**
TRENNSCHALTEREINSATZ
COMPARTIMENT DE DISJONCTEUR

(43) Date of publication of application: 26.01.2022
(73) Proprietor: ABB Schweiz AG, 5400 Baden (CH)
(72) Inventor: GENTSCH, Dietmar, 40882 Ratingen (DE); REUBER, Christian, 47877 Willich (DE)
(74) Representative: Maiwald GmbH

(56) References cited:
- DE-A1- 3 529 386
- JP-A- 2007 134 231
- US-A- 3 814 881

## Description

### FIELD OF THE INVENTION

The present invention relates to a circuit breaker compartment and to a switchgear.

### BACKGROUND OF THE INVENTION

In Low Voltage (LV), Medium Voltage (MV) and High Voltage (HV) Air Insulated Switchgear (AIS) and Gas Insulated Switchgear (GIS) have mechanical requirements with respect to the component parts and compartments. For AIS mechanical structures are provided to carry the pole parts of a circuit breaker CB and to capture or contain or withstand the forces generated by the currents. For GIS, the compartment(s) have to withstand pressure differences between their insides and the environment. Beside the normal operation, this especially applies to an evacuation of the compartment and also to the situation when an internal arc. SF6, or air or N2 can be utilized at elevated nominal pressures.

For AIS, the mechanical structures require a lot of structural material or components.

For GIS, for the achievement of the required pressure resistance, relatively large wall thicknesses are required, or dedicated internal support structures.

All of these present solutions for AIS and GIS add parts, manufacturing work and, in case of normal steel parts, lead to eddy current losses.

There is a need to address this situation.

Prior art DE 35 29 386 A1 discloses that in a pressure resistant high voltage switchgear, a vacuum interrupter is surrounded at a distance by a pressure resistant enclosure of insulating material, which is penetrated by a drive linkage under the load of a pressure resistant gap.

### SUMMARY OF THE INVENTION

Therefore, it would be advantageous to have an improved circuit breaker compartment for low, medium and high voltage use.

The object of the present invention is solved with the subject matter of the independent claims, wherein further embodiments are incorporated in the dependent claims.

In a first aspect, there is provided a circuit breaker compartment, comprising:
- one or more pole parts; and
- a housing.

Each pole part comprises:
- an insulating housing;
- a first moveable contact;
- a second fixed contact;
- a vacuum interrupter; and
- a pushrod.

The housing comprises:
- a housing body part;
- a first lid; and
- a second lid.

The first lid and/or second lid are configured to connect to the housing body part. A first end of each pole part is configured to connect to the first lid. A second end of each pole part is configured to connect to the second lid. In an assembled configuration:
- the first lid is connected to the housing body part;
- the second lid is connected to the housing body part; and
- the first end of each pole part is connected to the first lid and the second end of each pole part is connected to the second lid to force such that the first lid and second lid are forced towards each other such that the housing provides a gastight and/or pressure resistant compartment.

In an example, each of the one or more poles comprise a drive.

In an example, each of the one or more pole parts do not comprise an individual drive, but a connection to a common drive.

In an example, first lid and/or second lid are configured to detachably connect to the housing body part.

According to the invention, the first lid comprises one or more holes associated with the one or more pole parts. The first end of each pole part comprises a portion that is configured to extend through a hole of the one or more holes in the first lid.

According to the invention, the portion that is configured to extend through the hole of the one or more holes in the first lid comprises a threaded section. The connection of the first end of each pole part to the first lid can then comprise utilization of a nut that in the assembled configuration is positioned outside of the gastight and/or pressure resistant compartment.

In an example, the second lid comprises one or more holes associated with the one or more pole parts. The second end of each pole part comprises a portion that is configured to extend through a hole of the one or more holes in the second lid.

In an example, the portion that is configured to extend through the hole of the one or more holes in the second lid comprises a threaded section. The connection of the second end of each pole part to the second lid can then comprise utilization of a nut that in the assembled configuration is positioned outside of the gastight and/or pressure resistant compartment.

In an example, one or more heat sinks are configured to connect to the one or more portions of the one or more second ends of the one or more pole parts. In the assembled configuration the one or more heat sinks are positioned outside of the gastight and/or pressure resistant compartment.

In an example, one or more heat pipes are configured to connect to the one or more portions of the one or more second ends of the one or more pole parts and an outer part of each heat pipe comprises a heat sink. In the assembled configuration the outer part of each heat pipe with the heat sink is positioned outside of the gastight and/or pressure resistant compartment.

In an example, the one or more second ends of the one or more pole parts each comprise an electrically insulating region between an end of the portion that extends through the hole in the second lid and a primary electrical conductor of the pole part.

In an example, the one or more second fixed contacts extend through the one or more holes in the second lid.

In an example, the housing body part comprises one or more holes associated with the one or more pole parts, and the one or more second fixed contacts extend through the one or more holes in the housing body part.

In an example, each pole part comprises a side terminal electrically connected to the first moveable contact of the pole part. The housing body part comprises one or more holes associated with the one or more pole parts, and the one or more side terminals extend through the one or more holes in the housing body part.

In an example, the one or more holes associated with the one or more pole parts are within an extension of the housing body part configured for cable connection.

In an example, one or more covers are configured to cover the one or more portions of the one or more first ends of the one or more pole parts that extend through the first lid to provide a gastight compartment for at least the first moveable contact and pushrod of each pole part.

In an example, the gastight compartment of each pole part is separate to the gastight and/or pressure resistant compartment.

In an example, the insulating housing of each pole part comprises one or more openings and the gastight compartment of each pole part is a part of the gastight and/or pressure resistant compartment.

In an example, a gastight membrane is attached to the first part of each pole part adjacent to the portion of the first part that extends though the first lid.

In an example, the housing body part comprises one or more external mechanical support rings (6).

In an example, a portion of the insulating housing has no insulating material present.

In a second aspect, there is provided a switchgear, comprising:
- a circuit breaker compartment according to the first aspect and where the compartment comprises three pole parts;
- three disconnector switches; and
- a busbar compartment (100).

The housing body part comprises an extension for the three disconnector switches.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Figure. 1 shows a perspective view of an exemplar circuit breaker compartment;
Figure. 2 shows a sectional view of the circuit breaker compartment shown in Figure.1;
Figure. 3 shows a perspective view of an exemplar circuit breaker compartment;
Figure. 4 shows a sectional view of the circuit breaker compartment shown in Figure.3;
Figure. 5 shows a perspective view of an exemplar circuit breaker compartment;
Figure. 6 shows a sectional view of the circuit breaker compartment shown in Figure.5;
Figure. 7 shows a perspective view of an exemplar switchgear with an exemplar circuit breaker compartment;
Figure. 8 shows a sectional view of the switchgear and exemplar circuit breaker compartment shown in Figure.7;
Figure. 9 shows a perspective view of an exemplar circuit breaker compartment;
Figure. 10 shows a sectional view of an exemplar circuit breaker compartment; and
Figure. 11 shows a sectional view of an exemplar circuit breaker compartment.

### DETAILED DESCRIPTION OF EMBODIMENTS

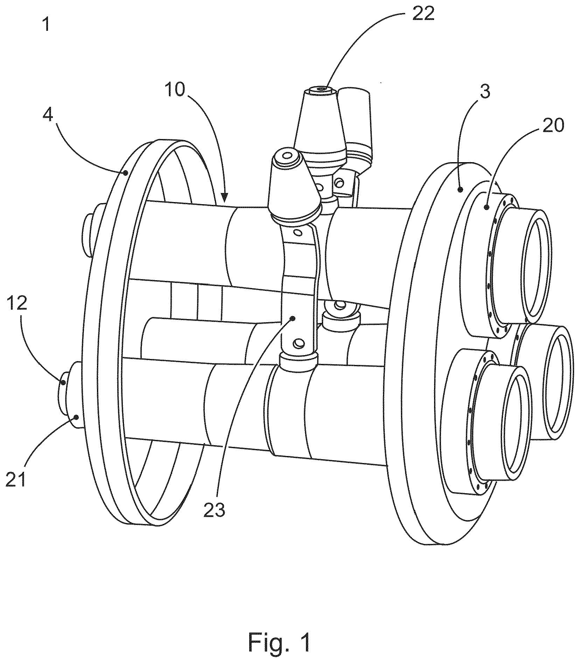

Figures. 1-11 relate to examples of a circuit breaker compartment 1 and a switchgear for low, medium or high voltage operation. The figures relate to a compartment having three pole parts, for example for a 3 phase system, however the compartment could have only one pole part or two pole parts.

It is to be noted that to aid visibility figures 1, 3 and 9 do not show the housing body part 5, so that the internal parts are visible.

The circuit breaker compartment 1 comprises one or more pole parts 10, and a housing 2.

Each pole part comprises:
- an insulating housing 17
- a first moveable contact 14
- a second fixed contact 12
- a vacuum interrupter 13, and
- a pushrod 15

The housing comprises:
- a housing body part 5
- a first lid 3, and
- a second lid 4

The first lid and/or second lid are configured to connect to the housing body part. A first end of each pole part is configured to connect to the first lid. A second end of each pole part is configured to connect to the second lid.

It is to be noted that the figures show a drive 16 for the pole parts. Each pole part can have its own drive, or each pole part can have a connection to a common drive. Thus, where the figures show each drive having its own drive, this is only exemplary.

Thus, In an example, each of the one or more poles comprise a drive.

Also, in an example, each of the one or more pole parts do not comprise an individual drive, but a connection to a common drive.

The connection of the lids to the housing body part can be permanent, e.g. by welding, or detachable, e.g. by rubber sealings and screws, or one lid is connected permanently while the other lid is connected detachably.

In an assembled configuration:
- the first lid is connected to the housing body part
- the second lid is connected to the housing body part;
- the first end of each pole part is connected to the first lid and the second end of each pole part is connected to the second lid to force such that the first lid and second lid are forced towards each other such that the housing provides a gastight and/or pressure resistant compartment 70.

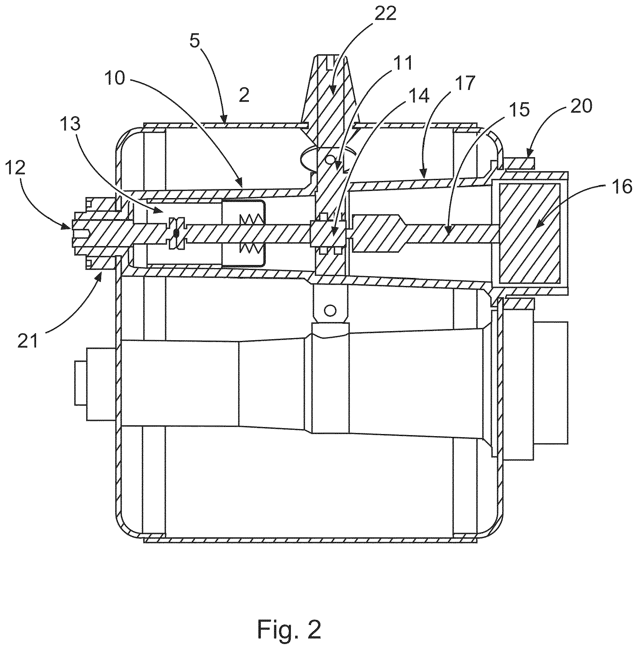

In an example, the first end of each pole part comprises the drive. This is clearly shown in figures 2, 4, 6, 8, 10, and 11.

In an example, the compartment is gastight and pressure resistant.

In an example, the first lid 3 comprises one or more holes associated with the one or more pole parts and the first end of each pole part comprises a portion that is configured to extend through a hole of the one or more holes in the first lid.

By having a part that extends through the lid, clamping means can be utilised on the outside of the lid to in effect pull the part that extends to the lid further through the lid thereby forcing lid back tight against the housing body.

In an example, the portion that is configured to extend through the hole of the one or more holes in the first lid comprises a threaded section. The connection of the first end of each pole part to the first lid comprises utilization of a nut 20 that in the assembled configuration is positioned outside of the gastight and/or pressure resistant compartment. This is shown in figure 2.

Thus, clamping in the form of a nut and bolt system is utilised, where tightening of the not on the portion of the pole part extension lid forces the lid back tight against the housing body.

In an example, the second lid 4 comprises one or more holes associated with the one or more pole parts and wherein the second end of each pole part comprises a portion that is configured to extend through a hole of the one or more holes in the second lid.

In an example, the portion that is configured to extend through the hole of the one or more holes in the second lid comprises a threaded section. The connection of the second end of each pole part to the second lid comprises utilization of a nut 21 that in the assembled configuration is positioned outside of the gastight and/or pressure resistant compartment. This is shown in figure 2.

However, rather than having both ends of the pole part with threaded sections with nuts to pull both lids tightly onto the body part, one end of the pole part could be for example permanently connected to one lid and the other end have a threaded section with a nut used to clamp the associated lid to the body part.

Also, other clamping means to a threaded section could be utilised, such as pinch clamp means, or even welding of the lids to the housing body after the lids have been forced inwards.

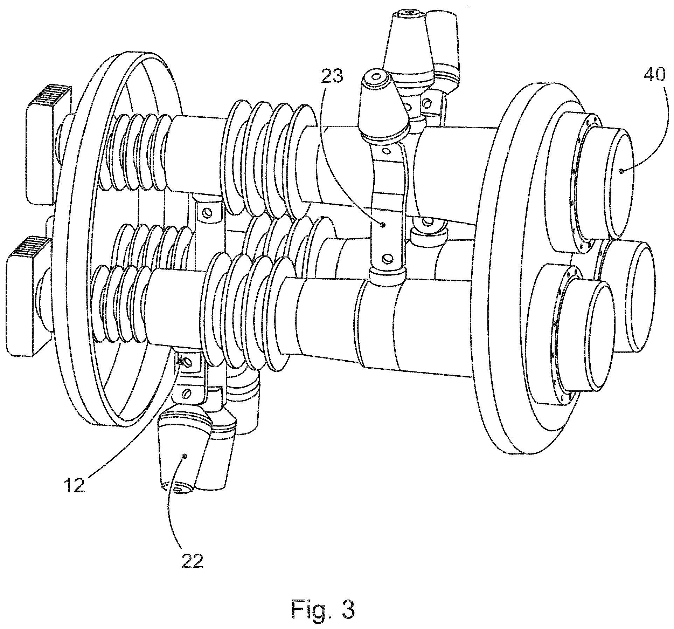

In an example, one or more heat sinks 32 are configured to connect to the one or more portions of the one or more second ends of the one or more pole parts. In the assembled configuration the one or more heat sinks are positioned outside of the gastight and/or pressure resistant compartment. This is shown in figures 3-9.

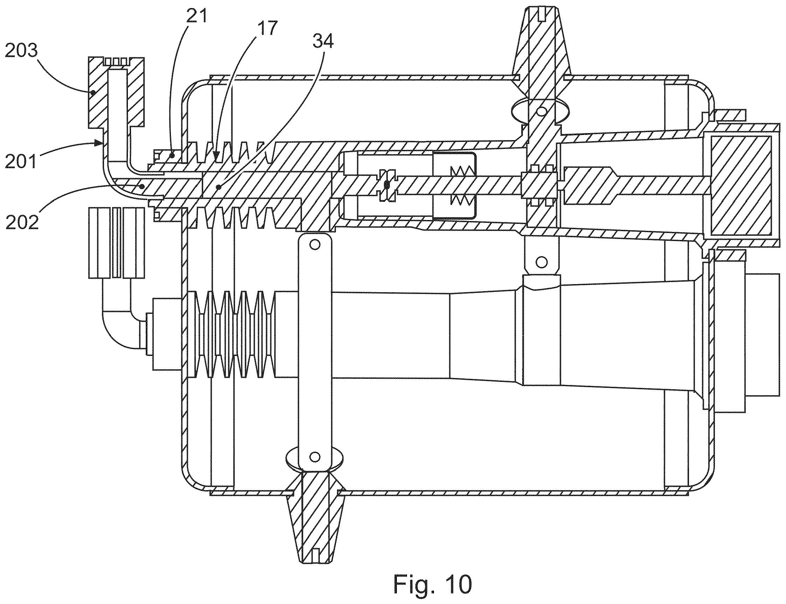

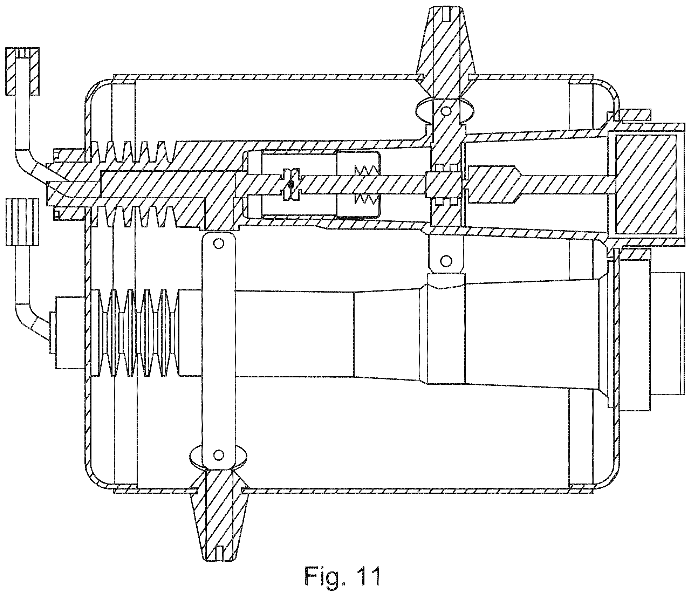

In an example, one or more heat pipes 200 are configured to connect to the one or more portions of the one or more second ends of the one or more pole parts. An outer part of each heat pipe comprises a heat sink 203. In the assembled configuration the outer part of each heat pipe with the heat sink is positioned outside of the gastight and/or pressure resistant compartment. This is shown in figures 10 and 11.

In an example, the one or more second ends of the one or more pole parts each comprise an electrically insulating region 33 between an end of the portion that extends through the hole in the second lid and a primary electrical conductor 34 of the pole part.

In an example, the one or more second fixed contacts extend through the one or more holes in the second lid. This is shown for example in figure 2.

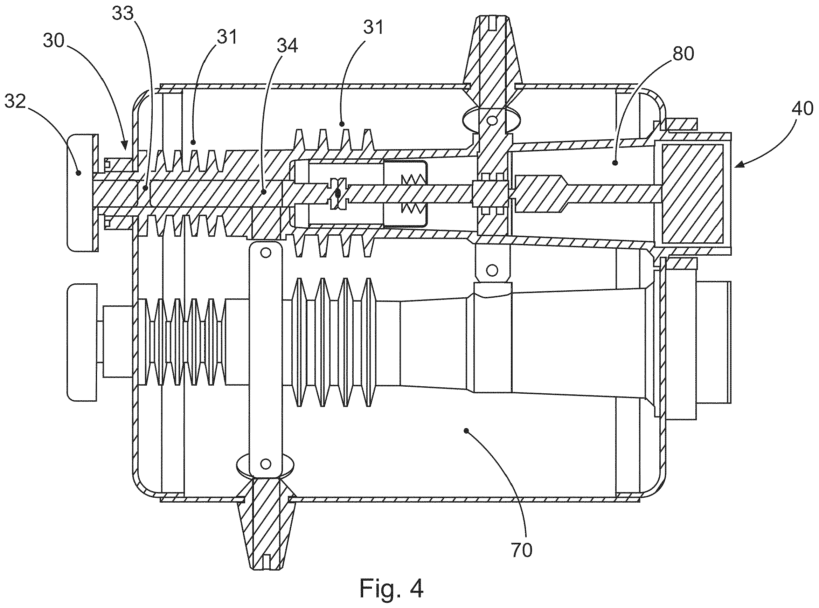

In an example, the housing body part comprises one or more holes associated with the one or more pole parts, and the one or more second fixed contacts extend through the one or more holes in the housing body part. This is shown for example in figure 4.

In an example, each pole part comprises a side terminal 11 electrically connected to the first moveable contact of the pole part. The housing body part comprises one or more holes associated with the one or more pole parts, and the one or more side terminals extend through the one or more holes in the housing body part.

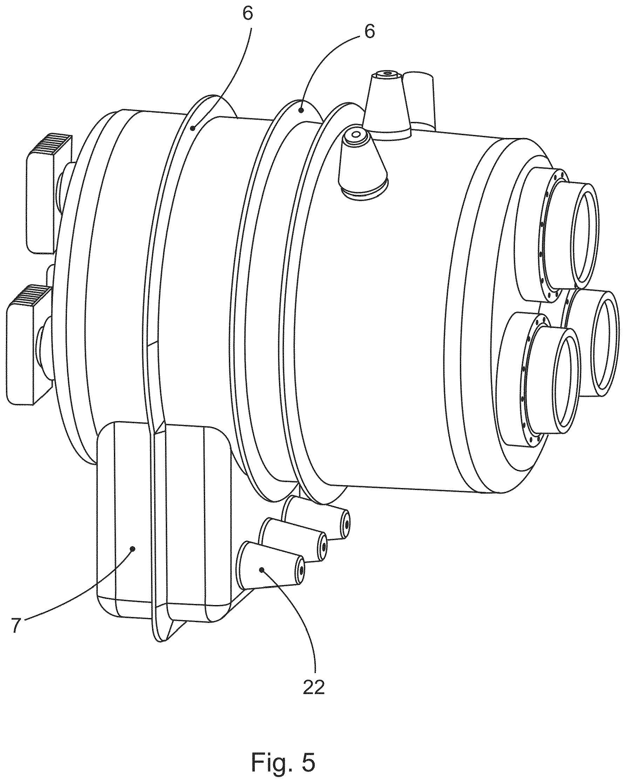

In an example, the one or more holes associated with the one or more pole parts are within an extension 7 of the housing body part configured for cable connection. This is shown in figures 5 - 8.

In an example, one or more covers 40, 60 are configured to cover the one or more portions of the one or more first ends of the one or pole parts that extend through the first lid to provide a gastight compartment 80 for at least the first moveable contact and pushrod of each pole part.

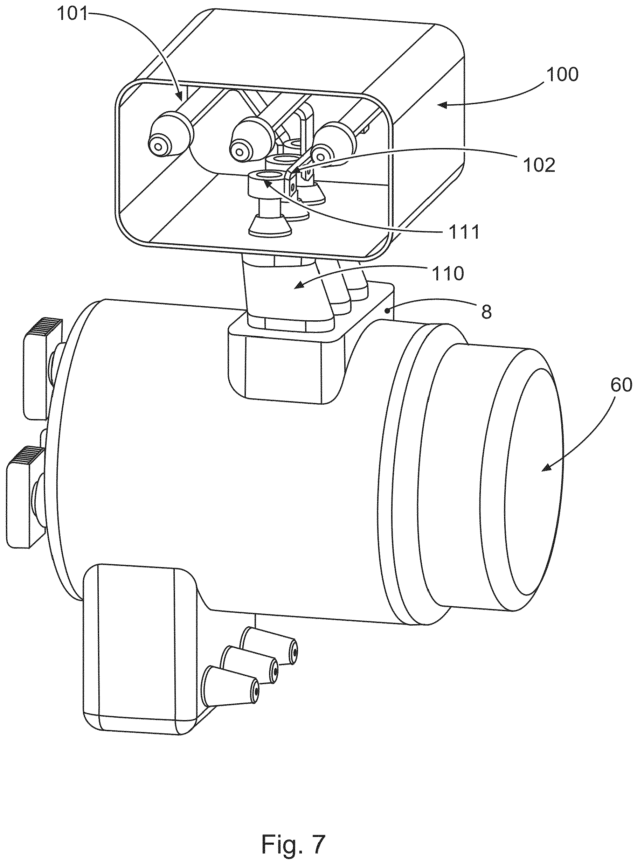

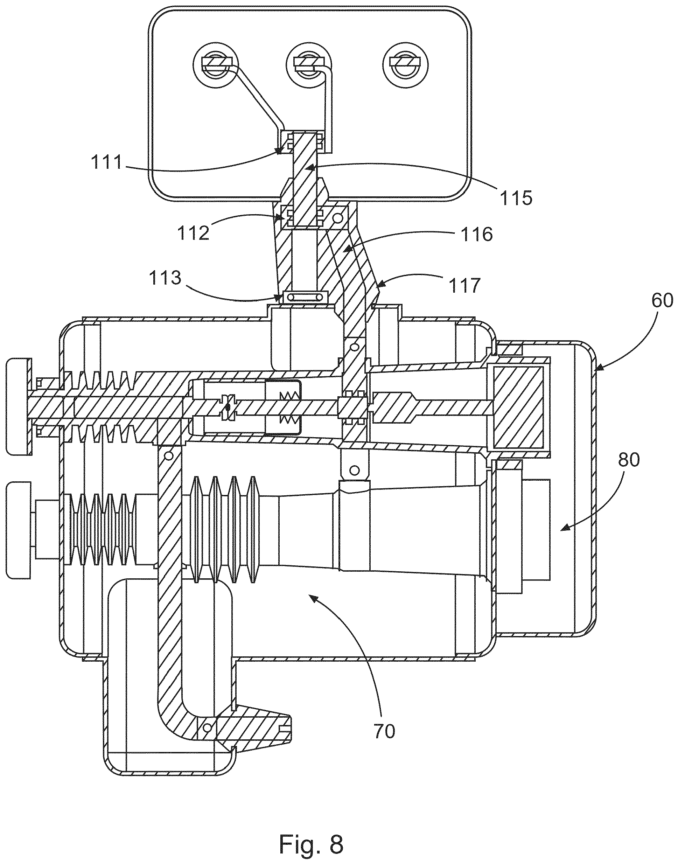

In figures 3, 4 and 9-11 individual covers 40 are shown covering the ends of the pole parts that extend through the first lid, whilst in figures 7 and 8 a global cover 60 covers all the ends of the pole parts that extend through the first lid.

An example, the gastight compartment 80 of each pole part is separate to the gastight and/or pressure resistant compartment 70. This is shown in figure 4 and 8 for example.

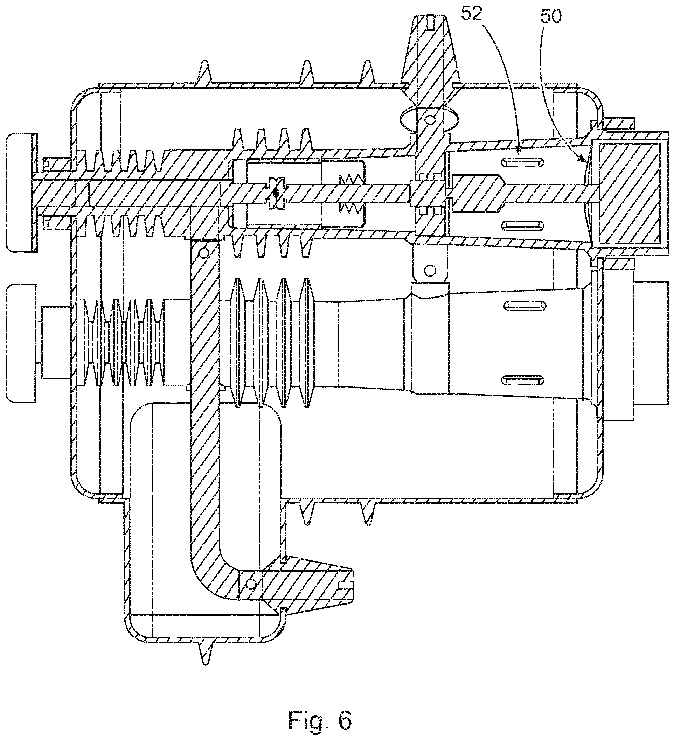

In an example, the insulating housing of each pole part comprises one or more openings 52 and the gastight compartment 80 of each pole part is a part of the gastight and/or pressure resistant compartment 70. This is shown for example in figure 6.

In an example, a gastight membrane 50 is attached to the first part of each pole part adjacent to the portion of the first part that extends though the first lid. This is shown for example in figure 6.

In an example, the housing body part comprises one or more external mechanical support rings 6. This is shown for example in figure 5.

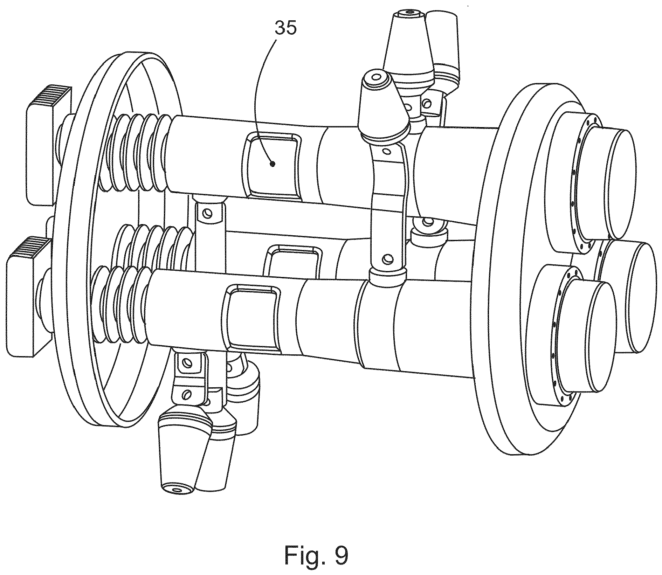

In an example, a portion 35 of the insulating housing has no insulating material present so that the heat losses form the VI 13 and the primary conductors can be more easily transferred to the CB compartment. This is shown for example in figure 9.

A switchgear also termed a panel can have a circuit breaker compartment as described above, where in a three phase system the circuit breaker compartment comprises 3 pole parts. The switchgear also has three disconnector switches 110 and a busbar compartment 100. The housing body part 5, of the above described circuit breaker compartment, comprises an extension 8 for the three disconnector switches. This is shown in figures 7 and 8.

### Reference Numerals

1 GIS CB compartment
2 Housing of 1
3 Lid at drive side - also called first lid
4 Second lid
5 Cylindrical part of the housing - also called housing body part
6 Mechanical support ring
7 Extension of 2 for cable connection
8 Extension of 2 for earth / disconnecting switches
10 Pole part
11 Upside terminal
12 Second terminal - also called second fixed contact
13 Vacuum Interrupter VI
14 Sliding Contact - also called first moveable contact
15 Pushrod
16 Drive
17 Insulating housing of 10
20 Nut for the drive side of 10
21 Nut for the second side of 10
22 Bushing
23 Electrical connector
30 Thermal bridge
31 Ribs in 17
32 Heatsink
33 Heat transfer element - also called electrically insulating region
34 Electrical conductor - also called primary electrical conductor
35 Area intentionally left free from insulation material
40 Cover plate - also called cover
50 Membrane
52 Openings or slits in 17
60 Large cover - also called cover
70 Main gas compartment - also called gastight and/or pressure resistant compartment
80 Auxiliary gas compartment - also called gastight compartment
100 Busbar compartment
101 Busbar
102 Electrical tie
110 Disconnecting and earthing switch - also termed three disconnector switches
111 Upper contact of 110 - busbar
112 Middle contact of 110 - CB
113 Lower contact of 110 - earth potential
200 Heat pipe
201 Tube
202 Working fluid
203 Heatsink

## Claims

1. A circuit breaker compartment (1), comprising:
- one or more pole parts (10); and
- a housing (2);
wherein, each pole part comprises:
- a vacuum interrupter (13) comprising an insulating housing (17);
- a first moveable contact (14); and
- a second fixed contact (12);
- and
- a pushrod (15);
wherein, the housing comprises:
- a housing body part (5);
- a first lid (3); and
- a second lid (4);
wherein, the first lid and/or second lid are configured to connect to the housing body part;
wherein, a first end of each pole part is configured to connect to the first lid;
wherein, a second end of each pole part is configured to connect to the second lid;
wherein, in an assembled configuration:
the first lid is connected to the housing body part;
the second lid is connected to the housing body part;
wherein, the first lid (3) comprises one or more holes associated with the one or more pole parts and wherein the first end of each pole part comprises a portion that is configured to extend through a hole of the one or more holes in the first lid;
**characterized in that**
the first end of each pole part is connected to the first lid and the second end of each pole part is connected to the second lid to force such that the first lid and second lid are forced towards each other such that the housing provides a gastight and/or pressure resistant compartment (70), wherein the portion that is configured to extend through the hole of the one or more holes in the first lid comprises a threaded section, and wherein the connection of the first end of each pole part to the first lid comprises utilization of a nut (20) that in the assembled configuration is positioned outside of the gastight and/or pressure resistant compartment.

2. Compartment according to any of claim 1, wherein the second lid (4) comprises one or more holes associated with the one or more pole parts and wherein the second end of each pole part comprises a portion that is configured to extend through a hole of the one or more holes in the second lid.

3. Compartment according to claim 2, wherein the portion that is configured to extend through the hole of the one or more holes in the second lid comprises a threaded section, and wherein the connection of the second end of each pole part to the second lid comprises utilization of a nut (21) that in the assembled configuration is positioned outside of the gastight and/or pressure resistant compartment.

4. Compartment according to any of claims 2-3, wherein one or more heat sinks (32) are configured to connect to the one or more portions of the one or more second ends of the one or more pole parts, and wherein in the assembled configuration the one or more heat sinks are positioned outside of the gastight and/or pressure resistant compartment.

5. Compartment according to any of claims 2-4, wherein one or more heat pipes (200) are configured to connect to the one or more portions of the one or more second ends of the one or more pole parts and wherein an outer part of each heat pipe comprises a heat sink (203), and wherein in the assembled configuration the outer part of each heat pipe with the heat sink is positioned outside of the gastight and/or pressure resistant compartment.

6. Compartment according to any of claims 2-5, wherein the one or more second ends of the one or more pole parts each comprise an electrically insulating region (33) between an end of the portion that extends through the hole in the second lid and a primary electrical conductor (34) of the pole part.

7. Compartment according to any of claims 1-6, wherein the one or more second fixed contacts extend through the one or more holes in the second lid.

8. Compartment according to any of claims 1-6, wherein the housing body part comprises one or more holes associated with the one or more pole parts, and wherein the one or more second fixed contacts extend through the one or more holes in the housing body part.

9. Compartment according to any of claims 1-8, wherein each pole part comprises a side terminal (11) electrically connected to the first moveable contact of the pole part, wherein the housing body part comprises one or more holes associated with the one or more pole parts, and wherein the one or more side terminals extend through the one or more holes in the housing body part.

10. Compartment according to claim 9, wherein the one or more holes associated with the one or more pole parts are within an extension (7) of the housing body part configured for cable connection.

11. Compartment according to any of claims 1-10, wherein one or more covers (40, 60) are configured to cover the one or more portions of the one or more first ends of the one or pole parts that extend through the first lid to provide a gastight compartment (80) for at least the first moveable contact and pushrod of each pole part.

12. Compartment according to claim 11, wherein the gastight compartment (80) of each pole part is separate to the gastight and/or pressure resistant compartment (70).

13. Compartment according to claim 11, wherein the insulating housing of each pole part comprises one or more openings (52) and wherein, the gastight compartment (80) of each pole part is a part of the gastight and/or pressure resistant compartment (70).

14. Compartment according to claim 13, wherein a gastight membrane (50) is attached to the first part of each pole part adjacent to the portion of the first part that extends though the first lid.

15. Compartment according to any of claims 1-14, wherein the housing body part comprises one or more external mechanical support rings (6).

16. Compartment according to any of claims 1-15, wherein a portion (35) of the insulating housing has no insulating material present.

17. A switchgear, comprising:
- a circuit breaker compartment according to any of claims 1-16, wherein the compartment comprises three pole parts;
- three disconnector switches (110); and
- a busbar compartment (100);
wherein, the housing body part (5) comprises an extension (8) for the three disconnector switches.

## Patentansprüche

1. Ein Leistungsschalterfach (1), umfassend:
- ein oder mehrere Polteile (10); und
- ein Gehäuse (2);
wobei jedes Polteil umfasst:
- einen Vakuumtrennschalter (13), der ein isolierendes Gehäuse (17) umfasst;
- einen ersten beweglichen Kontakt (14); und
- einen zweiten festen Kontakt (12);
und
- eine Schubstange (15);
wobei das Gehäuse umfasst:
- ein Gehäuseteil (5);
- einen ersten Deckel (3); und
- einen zweiten Deckel (4);
wobei der erste Deckel und/oder der zweite Deckel so konfiguriert sind, dass sie mit dem Gehäuseteil verbunden sind;
wobei ein erstes Ende jedes Polteils so konfiguriert ist, dass es mit dem ersten Deckel verbunden ist;
wobei ein zweites Ende jedes Polteils so konfiguriert ist, dass es mit dem zweiten Deckel verbunden ist;
wobei, in einer zusammengebauten Konfiguration:
der erste Deckel mit dem Gehäuseteil verbunden ist;
der zweite Deckel mit dem Gehäuseteil verbunden ist;
wobei der erste Deckel (3) ein oder mehrere Löcher umfasst, die mit dem einen oder den mehreren Polteilen verbunden sind, und wobei das erste Ende jedes Polteils einen Abschnitt umfasst, der so konfiguriert ist, dass er sich durch ein Loch des einen oder der mehreren Löcher in dem ersten Deckel erstreckt,
**dadurch gekennzeichnet, dass**
das erste Ende jedes Polteils mit dem ersten Deckel verbunden ist und das zweite Ende jedes Polteils mit dem zweiten Deckel verbunden ist, um eine Kraft auszuüben, so dass der erste Deckel und der zweite Deckel gegeneinander gepresst werden, so dass das Gehäuse ein gasdichtes und/oder druckfestes Fach (70) bereitstellt, wobei der Abschnitt, der so konfiguriert ist, dass er sich durch das Loch des einen oder der mehreren Löcher im ersten Deckel erstreckt, einen Gewindeabschnitt umfasst, und wobei die Verbindung des ersten Endes jedes Polteils mit dem ersten Deckel die Verwendung einer Mutter (20) umfasst, die in der zusammengebauten Konfiguration außerhalb des gasdichten und/oder druckfesten Fachs angeordnet ist.

2. Fach nach Anspruch 1, wobei der zweite Deckel (4) ein oder mehrere Löcher umfasst, die mit dem einen oder den mehreren Polteilen verbunden sind, und wobei das zweite Ende jedes Polteils einen Abschnitt umfasst, der so konfiguriert ist, dass er sich durch ein Loch des einen oder der mehreren Löcher in dem zweiten Deckel erstreckt.

3. Fach nach Anspruch 2, wobei der Abschnitt, der so konfiguriert ist, dass er sich durch das Loch des einen oder der mehreren Löcher im zweiten Deckel erstreckt, einen Gewindeabschnitt umfasst, und wobei die Verbindung des zweiten Endes jedes Polteils mit dem zweiten Deckel die Verwendung einer Mutter (21) umfasst, die in der zusammengebauten Konfiguration außerhalb des gasdichten und/oder druckfesten Fachs positioniert ist.

4. Fach nach einem der Ansprüche 2 bis 3, wobei ein oder mehrere Kühlkörper (32) so konfiguriert sind, dass sie mit dem einen oder den mehreren Abschnitten des einen oder der mehreren zweiten Enden des einen oder der mehreren Polteile verbunden sind, und wobei in der zusammengebauten Konfiguration der eine oder die mehreren Kühlkörper außerhalb des gasdichten und/oder druckfesten Fachs angeordnet sind.

5. Fach nach einem der Ansprüche 2 bis 4, wobei ein oder mehrere Wärmerohre (200) so konfiguriert sind, dass sie mit dem einen oder den mehreren Abschnitten des einen oder der mehreren zweiten Enden des einen oder der mehreren Polteile verbunden sind, und wobei ein äußerer Teil jedes Wärmerohrs einen Kühlkörper (203) umfasst, und wobei in der zusammengebauten Konfiguration der äußere Teil jedes Wärmerohrs mit dem Kühlkörper außerhalb des gasdichten und/oder druckfesten Fachs angeordnet ist.

6. Fach nach einem der Ansprüche 2-5, wobei das eine oder die mehreren zweiten Enden des einen oder der mehreren Polteile jeweils einen elektrisch isolierenden Bereich (33) zwischen einem Ende des Abschnitts, der sich durch das Loch im zweiten Deckel erstreckt, und einem primären elektrischen Leiter (34) des Polteils aufweisen.

7. Fach nach einem der Ansprüche 1-6, wobei sich der eine oder die mehreren zweiten festen Kontakte durch das eine oder die mehreren Löcher im zweiten Deckel erstrecken.

8. Fach nach einem der Ansprüche 1 bis 6, wobei der Gehäuseteil ein oder mehrere Löcher aufweist, die mit dem einen oder den mehreren Polteilen verbunden sind, und wobei sich der eine oder die mehreren zweiten festen Kontakte durch das eine oder die mehreren Löcher in dem Gehäuseteil erstrecken.

9. Fach nach einem der Ansprüche 1-8, wobei jedes Polteil einen Seitenanschluss (11) umfasst, der elektrisch mit dem ersten beweglichen Kontakt des Polteils verbunden ist, wobei das Gehäuseteil ein oder mehrere Löcher umfasst, die mit dem einen oder den mehreren Polteilen verbunden sind, und wobei sich der eine oder die mehreren Seitenanschlüsse durch das eine oder die mehreren Löcher in dem Gehäuseteil erstrecken.

10. Fach nach Anspruch 9, wobei das eine oder die mehreren Löcher, die mit dem einen oder den mehreren Polteilen verbunden sind, innerhalb einer Verlängerung (7) des Gehäuseteils liegen, die für den Kabelanschluss konfiguriert ist.

11. Fach nach einem der Ansprüche 1-10, wobei eine oder mehrere Abdeckungen (40, 60) so konfiguriert sind, dass sie den einen oder die mehreren Abschnitte des einen oder der mehreren ersten Enden des einen oder der Polteile abdecken, die sich durch den ersten Deckel erstrecken, um ein gasdichtes Fach (80) für mindestens den ersten beweglichen Kontakt und die Schubstange jedes Polteils bereitzustellen.

12. Fach nach Anspruch 11, wobei das gasdichte Fach (80) jedes Polteils von dem gasdichten und/oder druckfesten Fach (70) getrennt ist.

13. Fach nach Anspruch 11, wobei das Isoliergehäuse jedes Polteils eine oder mehrere Öffnungen (52) aufweist und wobei das gasdichte Fach (80) jedes Polteils ein Teil des gasdichten und/oder druckfesten Fachs (70) ist.

14. Fach nach Anspruch 13, wobei eine gasdichte Membran (50) an dem ersten Teil jedes Polteils angrenzend an den Abschnitt des ersten Teils, der sich durch den ersten Deckel erstreckt, befestigt ist.

15. Fach nach einem der Ansprüche 1 bis 14, wobei der Gehäuseteil einen oder mehrere äußere mechanische Stützringe (6) aufweist.

16. Fach nach einem der Ansprüche 1 bis 15, wobei ein Teil (35) des Isoliergehäuses kein Isoliermaterial aufweist.

17. Schaltgerät, umfassend:
- ein Leistungsschalterfach nach einem der Ansprüche 1-16, wobei das Fach drei Polteile umfasst;
- drei Trennschalter (110); und
- ein Sammelschienenfach (100);
wobei der Gehäuseteil (5) eine Verlängerung (8) für die drei Trennschalter aufweist.

## Revendications

1. Compartiment de disjoncteur (1), comprenant :
- une ou plusieurs parties polaires (10) ; et
- un logement (2) ;
dans lequel, chaque partie polaire comprend :
- un interrupteur à vide (13) comprenant un logement isolant (17) ;
- un premier contact mobile (14) ; et
- un second contact fixe (12) ; et
- une tige de poussoir (15) ;
dans lequel, le logement comprend :
- une partie de corps de logement (5) ;
- un premier couvercle (3) ; et
- un second couvercle (4) ;
dans lequel, le premier couvercle et/ou le second couvercle sont configurés pour se connecter à la partie de corps de logement ;
dans lequel, une première extrémité de chaque partie polaire est configurée pour se connecter au premier couvercle ;
dans lequel, une seconde extrémité de chaque partie polaire est configurée pour se connecter au second couvercle ;
dans lequel, dans une configuration assemblée :
le premier couvercle est relié à la partie de corps de logement ;
le second couvercle est relié à la partie de corps de logement ;
dans lequel, le premier couvercle (3) comprend un ou plusieurs trous associés à la ou aux plusieurs parties polaires et dans lequel la première extrémité de chaque partie polaire comprend une portion qui est configurée pour s'étendre à travers un trou des un ou plusieurs trous dans le premier couvercle ;
**caractérisé en ce que**
la première extrémité de chaque partie polaire est connectée au premier couvercle et la seconde extrémité de chaque partie polaire est connectée au second couvercle de telle sorte que le premier couvercle et le second couvercle sont forcés l'un vers l'autre de telle sorte que le logement fournit un compartiment étanche aux gaz et/ou résistant à la pression (70), dans lequel la portion qui est configurée pour s'étendre à travers le trou des un ou plusieurs trous dans le premier couvercle comprend une section filetée, et dans lequel la connexion de la première extrémité de chaque partie polaire au premier couvercle comprend l'utilisation d'un écrou (20) qui, dans la configuration assemblée, est positionné à l'extérieur du compartiment étanche aux gaz et/ou résistant à la pression.

2. Compartiment selon la revendication 1, dans lequel le second couvercle (4) comprend un ou plusieurs trous associés à la ou aux plusieurs parties polaires et dans lequel la seconde extrémité de chaque partie polaire comprend une portion qui est configurée pour s'étendre à travers un trou des un ou plusieurs trous dans le second couvercle.

3. Compartiment selon la revendication 2, dans lequel la portion qui est configurée pour s'étendre à travers le trou des un ou plusieurs trous dans le second couvercle comprend une section filetée, et dans lequel la connexion de la seconde extrémité de chaque partie polaire au second couvercle comprend l'utilisation d'un écrou (21) qui, dans la configuration assemblée, est positionné à l'extérieur du compartiment étanche aux gaz et/ou résistant à la pression.

4. Compartiment selon l'une quelconque des revendications 2 et 3, dans lequel un ou plusieurs dissipateurs thermiques (32) sont configurés pour se connecter à la ou aux plusieurs portions des une ou plusieurs secondes extrémités des une ou plusieurs parties polaires, et dans lequel, dans la configuration assemblée, les un ou plusieurs dissipateurs thermiques sont positionnés à l'extérieur du compartiment étanche aux gaz et/ou résistant à la pression.

5. Compartiment selon l'une quelconque des revendications 2 à 4, dans lequel un ou plusieurs caloducs (200) sont configurés pour se connecter à la ou aux plusieurs portions des une ou plusieurs secondes extrémités des une ou plusieurs parties polaires et dans lequel une partie extérieure de chaque caloduc comprend un dissipateur thermique (203), et dans lequel dans la configuration assemblée, la partie extérieure de chaque caloduc avec le dissipateur thermique est positionnée à l'extérieur du compartiment étanche aux gaz et/ou résistant à la pression.

6. Compartiment selon l'une quelconque des revendications 2 à 5, dans lequel les une ou plusieurs secondes extrémités des une ou plusieurs parties polaires comprennent chacune une région électriquement isolante (33) entre une extrémité de la portion qui s'étend à travers le trou dans le second couvercle et un conducteur électrique primaire (34) de la partie polaire.

7. Compartiment selon l'une quelconque des revendications 1 à 6, dans lequel les un ou plusieurs seconds contacts fixes s'étendent à travers les un ou plusieurs trous du second couvercle.

8. Compartiment selon l'une quelconque des revendications 1 à 6, dans lequel la partie de corps de logement comprend un ou plusieurs trous associés à la ou aux plusieurs parties polaires, et dans lequel les un ou plusieurs seconds contacts fixes s'étendent à travers les un ou plusieurs trous de la partie de corps de logement.

9. Compartiment selon l'une quelconque des revendications 1 à 8, dans lequel chaque partie polaire comprend une borne latérale (11) connectée électriquement au premier contact mobile de la partie polaire, dans lequel la partie de corps de logement comprend un ou plusieurs trous associés à la ou aux plusieurs parties polaires, et dans lequel les une ou plusieurs bornes latérales s'étendent à travers les un ou plusieurs trous dans la partie de corps de logement.

10. Compartiment selon la revendication 9, dans lequel les un ou plusieurs trous associés à la ou aux plusieurs parties polaires sont à l'intérieur d'une extension (7) de la partie de corps de logement configurée pour la connexion de câbles.

11. Compartiment selon l'une quelconque des revendications 1 à 10, dans lequel un ou plusieurs couvercles (40, 60) sont configurés pour couvrir les une ou plusieurs portions des une ou plusieurs premières extrémités des une ou plusieurs parties polaires qui s'étendent à travers le premier couvercle pour fournir un compartiment étanche aux gaz (80) pour au moins le premier contact mobile et la tige de poussoir de chaque partie polaire.

12. Compartiment selon la revendication 11, dans lequel le compartiment étanche aux gaz (80) de chaque partie polaire est séparé du compartiment étanche aux gaz et/ou résistant à la pression (70).

13. Compartiment selon la revendication 11, dans lequel le logement isolant de chaque partie polaire comprend une ou plusieurs ouvertures (52) et dans lequel le compartiment étanche aux gaz (80) de chaque partie polaire est une partie du compartiment étanche aux gaz et/ou résistant à la pression (70).

14. Compartiment selon la revendication 13, dans lequel une membrane étanche aux gaz (50) est fixée à la première partie de chaque partie polaire adjacente à la portion de la première partie qui s'étend à travers le premier couvercle.

15. Compartiment selon l'une quelconque des revendications 1 à 14, dans lequel la partie de corps de logement comprend un ou plusieurs anneaux de support mécanique externes (6).

16. Compartiment selon l'une quelconque des revendications 1 à 15, dans lequel une portion (35) du logement isolant ne comporte pas de matériau isolant.

17. Appareillage de connexion, comprenant :
- un compartiment de disjoncteur selon l'une quelconque des revendications 1 à 16, dans lequel le compartiment comprend trois parties polaires ;
- trois sectionneurs interrupteurs (110) ; et
- un compartiment de barres omnibus (100) ;
dans lequel, la partie de corps de logement (5) comprend une extension (8) pour les trois sectionneurs interrupteurs.
